# EUROPEAN PATENT APPLICATION

(11) **EP 2 548 738 A1**
(43) Date of publication of application: **23.01.2013**
(21) Application number: 12176703.2
(22) Date of filing: 17.07.2012
(51) Int. Cl.: B32B 43/00

(54) **Method and apparatus for detaching plates joined to each other**

(30) Priority: 19.07.2011 JP 2011157821
(71) Applicant: NITTO DENKO CORPORATION, Ibaraki-shi, Osaka 567-8680 (JP)
(72) Inventor: Fujita, Masato, Ibaraki-shi, Osaka 567-8680 (JP); Hoshino, Shinji, Ibaraki-shi, Osaka 567-8680 (JP); Nonaka,Takahiro, Ibaraki-shi, Osaka 567-8680 (JP)
(74) Representative: Grünecker, Kinkeldey, Stockmair & Schwanhäusser

(57) **Abstract**

A workpiece (W) composed of a glass plate (1) and a display panel (3) joined to each other via an adhesive sheet (4) is suction-held on both surfaces thereof by a pair of upper and lower holding members 5,6). The glass plate (1) is detached from the display panel (3) through swinging downward one end of the lower holding member (6) around a support shaft (8) provided on the other end side thereof with an entire surface of the glass plate (1) being held in a planar state with a suction surface of the lower holding member (6).

## Description

### BACKGROUND OF THE INVENTION

### 1. Field of the Invention

The present invention relates to a detaching method and a detaching apparatus capable of reusably detaching a plate from a workpiece composed of two plates including the plate that are joined to each other via an adhesive sheet or a curable resin layer.

### 2. Description of the Related Art

A flat-panel display such as a liquid crystal display and the like is composed of a display panel and a protection panel including a transparent plate such as an acrylic panel and a glass plate. In such a flat-panel display, the protection panel is provided with a certain gap from the display panel such that, when some impact is inflicted thereon, the impact will not reach the display panel.

Hence, for example, a technique for eliminating an air layer between a liquid crystal panel and a protection panel in liquid crystal displays is known, which includes joining a liquid crystal panel to a transparent protection plate via a transparent adhesive sheet made of an acrylic adhesive (JP-A-2002-348546). Moreover, for a similar purpose, instead of a transparent adhesive sheet, use of an adhesive made of a polyorganosiloxane composition having a specific plasticity (silicone adhesive) and processed into a sheet has also been proposed (JP-A-2004-212521).

As mentioned above, however, when a liquid crystal panel is joined to a transparent protection plate via a transparent adhesive sheet in liquid crystal displays, it is not easy to join the liquid crystal panel to the transparent protection plate with no displacement. Moreover, it is also not easy to join the liquid crystal panel to the transparent protection plate with no bubble between the liquid crystal panel or transparent protection plate and a double-faced adhesive sheet, which bubble causing a light reflection loss that degrades display visibility. Such inconvenience cannot be completely eliminated. Moreover, even if bubbles are not enclosed during adhering of the liquid crystal panel to the transparent protection plate by visual observation, minute bubble components originally enclosed in an adhesive sheet may move to an interface between the adhesive sheet and the liquid crystal panel or the transparent protection plate over time. In this case, the bubbles may cause a light reflection loss, whereby the display visibility is reduced.

Moreover, silicone and acrylic transparent adhesive sheets after joined to a transparent protection plate or a liquid crystal panel are difficult to detach. Hence, once the above-mentioned inconvenience occurs, the expensive liquid crystal display panel and transparent protection plate need to be discarded.

Meanwhile, portable instruments with display function such as a portable telephone, a smart-phone, a tablet PC, a Personal Digital Assistant (PDA: Personal Digital Assistant), a handheld game machine, car-navigation system and the like are progressingly designed thinner at a remarkable speed in recent years. This necessitates reduction of the thickness of flat-panel displays to be mounted thereon such as a liquid crystal display and the like. As a result, for example, a display panel of a flat-panel display to be incorporated into such instruments with portable display function is designed still thinner. Moreover, when, for example, a transparent protection plate of a display panel is a glass plate, a plate having a thickness of less than 1.0 mm has been considered for use.

However, when such a thin display panel is joined to a transparent protection plate via the adhesive sheet, since the display panel and the transparent plate are poor in flexibility, they cannot be detached again from each other without any breakage or crack in the plates. Moreover, a touch panel may be provided on a display panel of a flat-panel display mounted on such instruments with portable display function. It is also in consideration that a transparent protection plate is joined to a glass plate with a transparent electrode as an operating plate for a touch panel via a transparent double-faced adhesive sheet. In such case, a problem may arise that the glass plate with a transparent electrode and the transparent plate cannot be detached reusably from each other without any breakage or crack in the plates.

Recently, moreover, it has been proposed to form a layer by filling a highly transparent curable resin such as acrylic, urethane acrylate series, silicone series and the like, which is cured by heat or UV irradiation, between a display panel and a transparent protection plate to integrally join them. However, such acrylic, urethane acrylate series and silicone series curable resin layers, which are cured by heat or UV irradiation, also adhere to a display panel and a transparent plate with a comparatively higher adhesive strength. As a result, the transparent plate cannot be easily detached reusably without any breakage or crack when the display panel and the thin transparent plate need to be re-joined.

In order to overcome the foregoing problems, the glass plate is joined to the transparent protection plate via an adhesive sheet or a curable resin layer having a smaller shear stress. That is, a shear stress is applied to the adhesive tape and the like, whereby the glass plate and the transparent plate can be detached easily from each other. Specifically, a workpiece having the glass plate and the transparent plate integrally joined to each other is fixed via the double-faced adhesive tape. An operator holds down one end of an upper plate by hand to handle it as an axis, and holds the other end to slide the plate horizontally, whereby the transparent plate is detached from the glass plate while a shearing stress is applied to the adhesive sheet (JP-A-2010-121134).

However, in the detachment method mentioned above, only an adhesive sheet or curable resin layer having a smaller shearing stress can be adopted, causing inconvenience of limited applications.

Moreover, the defective likely increases that is generated upon joining of the glass plate and the like due to increased production of the instruments with portable display function accompanying rapid increase in trade thereof, although the yield seems to be high and productivity seems to be enhanced numerically. As a result, conventional manual adjustment of the defective by an operator is not useful. Furthermore, reuse parts of higher unit price is desired without discarding them.

### SUMMARY OF THE INVENTION

This invention has been made regarding the state of the art noted above, and its primary object is to provide a detaching method and a detaching apparatus capable of detaching a plate from another plate, the plates being joined to each other, automatically and accurately without causing any breakage or crack in the plates regardless of types of adhesive sheets or curable resin layers.

This invention is configured as under to achieve the above object. One example of this invention discloses a method of detaching a plate from a workpiece composed of at least two plates including the plate that are joined to each other via an adhesive sheet or a curable resin layer. The method includes: a holding step holding both surfaces of the workpiece by a pair of holding members; and a detaching step detaching a first plate from a second plate through swinging one holding member around a support shaft provided on a first end side of a holding surface of the workpiece with an entire surface of the first plate being held in a planar state with the holding member.

According to the foregoing method, the holding member holds the entire surface of the plate. Thus the plate to be detached from the other is not bent and damaged due to swing of the holding member. Moreover, the support shaft as a supporting point for swing of the holding member is located on the end side of the plate. Thus no load the supporting point is applied to the center of the plate, and thus the plate is not damaged. Herein, one end side of the plate that defines a position of the support shaft is not limited to one end of the plate, but also includes a position outside of this one end. The outside position is set in a position where one end as the supporting point of the holding member does not contact to the workpiece and no unnecessary load is applied.

The foregoing method preferably includes the following. That is, a heater is provided in at least one of the holding members, and the first plate is detached from the second plate while the adhesive sheet or the curable resin layer is heated by the heater via the holding member.

According to this method, heating softens the adhesive sheet and the curable resin layer. Thus the plates can be detached from each other in a stress smaller than that applied under a non-heating condition.

Moreover, the workpiece is composed of two plates and an adhesive sheet. The two plates are, for example, optical plates. The adhesive sheet is, for example, a transparent adhesive sheet.

Moreover, examples of the two optical plates includes a combination of one display panel of a flat-panel display and one transparent protection plate for protecting the display panel, and a combination of one display panel of a flat-panel display and one glass plate with a transparent electrode for a touch panel.

Another example of this invention discloses an apparatus for detaching a plate from a workpiece composed of at least two plates including the plate that are joined to each other via an adhesive sheet or a curable resin layer. The apparatus includes: a holding mechanism for holding both surfaces of the workpiece by a pair of holding members, the workpiece being provided with a support shaft on one end side of a holding surface thereof around which at least one holding member can swing; and a drive mechanism for swinging the holding member.

This configuration can implement the above method suitably.

In the foregoing configuration, a heater is preferably embedded within at least one of the holding members.

According to this configuration, the heater heats and softens the adhesive sheet and the curable resin layer. Thus the plates can be detached from each other in a stress smaller than that applied under a non-heating condition.

It is to be understood that both the foregoing general description and the following detailed description are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this specification, illustrate embodiments of the invention, and together with the description serve to explain the principles of the invention.
Figure 1 is a side view in vertical section of a workpiece.
Figure 2 is a schematic front view of a detaching apparatus.
Figures 3 and 4 are front views each showing operations of the detaching apparatus.
Figures 5 and 6 are schematic front views each showing an apparatus according to one modification.
Figure 7 is a schematic plan view showing the apparatus according to one modification.
Figure 8 is a schematic front view showing an apparatus according to another modification.

### DESCRIPTION OF THE PREFERRED EMBODIMENTS

The invention is described more fully hereinafter with reference to the accompanying drawings, in which embodiments of the invention are shown. This invention may, however, be embodied in many different forms and should not be construed as limited to the embodiments set forth herein. Rather, these embodiments are provided so that this disclosure is thorough, and will fully convey the scope of the invention to those skilled in the art. In the drawings, the size and relative sizes of layers and regions may be exaggerated for clarity. Like reference numerals in the drawings denote like elements.

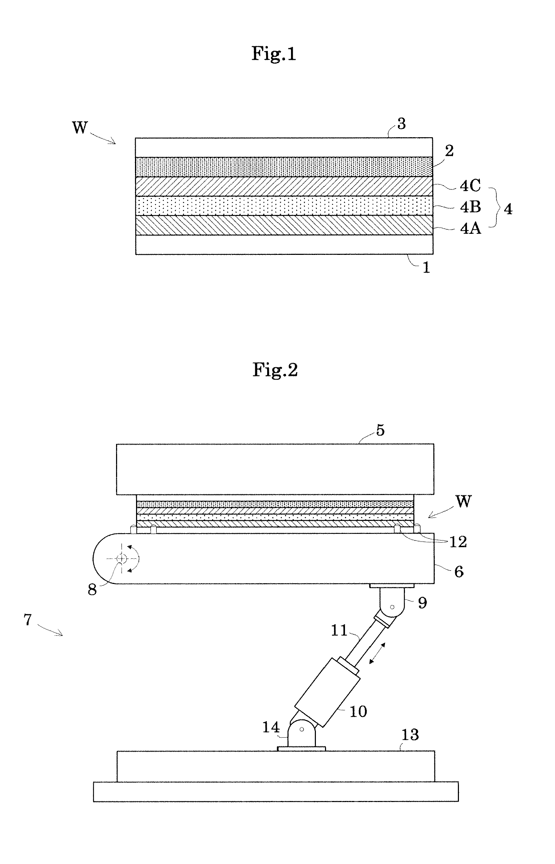

One embodiment of this invention is now to be described below with reference to the drawings. Here, in this example, a flat-panel display is to be described as one example of a workpiece W. As shown in Figure 1, a flat-panel display has a glass plate 1 with a transparent electrode through which a touch panel can be operated, a polarizing plate 2, which are joined to each other via a transparent double-faced adhesive sheet 4, and a display panel 3. Herein, the double-faced adhesive tape 4 includes different types of adhesive layers 4A and 4C between which a base material 4B is formed. The adhesive layer 4A to be joined to the glass plate 1 has adhesion lower than the other adhesive layer 4C. Thus, in this example of the invention, the glass plate 1 is detached from an adhesive interface between the glass plate 1 and the adhesive layer 4A having lower adhesion. Note that, although the double-faced adhesive sheet 4 includes the base material 4B in this example, the base is not essential for the adhesive sheet of the example of this invention. An adhesive sheet composed of only adhesive layers may be adopted.

Figure 2 is a front view of a detaching apparatus.

The detaching apparatus includes a pair of upper and lower holding members 5 and 6, and a drive mechanism 7 for swinging the lower holding member 6. Next, each component will be described in detail.

The upper holding member 5 is fixed horizontally on an apparatus frame. The upper member 5 is communicated with a vacuum source. The vacuum source suction-holds the workpiece W on a rear face side thereof. In this example, the upper holding member 5 suction-holds the display panel 3 that forms the workpiece W. The upper holding member 5 has a suction surface of a metal or ceramic porous material in which suction grooves or holes are formed. The suction surface may be covered with an elastic body, such as a foaming sponge, with permeability. Such suction surface is appropriately modified in accordance with the workpiece W to be held.

The lower holding member 6 has a first end pivoted through a horizontal support shaft 8 and a second end pivotably connected via a flange joint 9 provided on a rear face thereof to a rod 11 of a cylinder 10 such that a tip end of the rod 11 can pivot. The lower holding member 6 suction-holds the workpiece W on a front face thereof. Similarly to the upper holding member 5, the lower holding member 6 has a suction surface of a metal or ceramic porous material in which suction grooves or holes are formed. The suction surface may be covered with an elastic body, such as a foaming sponge, with permeability. Such suction surface is appropriately modified in accordance with the workpiece W to be held.

The suction surface is provided with a positioning member 12, such as a pin, for aligning the workpiece W to be suction-held. The position where the positioning member 12 is provided is variable in accordance with the size of the workpiece W.

Here, when the lower holding member 6 swings, the pivot 8 functions as a supporting point. Hence, the pivot 8 is provided in the first end of the workpiece. It is preferable to provide the pivot apart from the first end of the workpiece W, as shown in Figure 2. That is, the supporting point where load is applied is spaced away from the holding surface of the workpiece W when the lower holding member 6 swings. As a result, the glass plate 1 to be detached can be prevented from damages.

The air cylinder 10 can pivot via a flange joint 14. The flange joint 14 is attached to a base 13 on a proximal end thereof.

Herein, the upper and lower holding members 5 and 6 correspond to a pair of holding members in the example of the invention. The support shaft 8 and the air cylinder 10 correspond to the drive mechanism in the example of the invention.

Description will be given next of operation for detaching the glass plate 1 from the display panel 3 with use of the apparatus in the foregoing example.

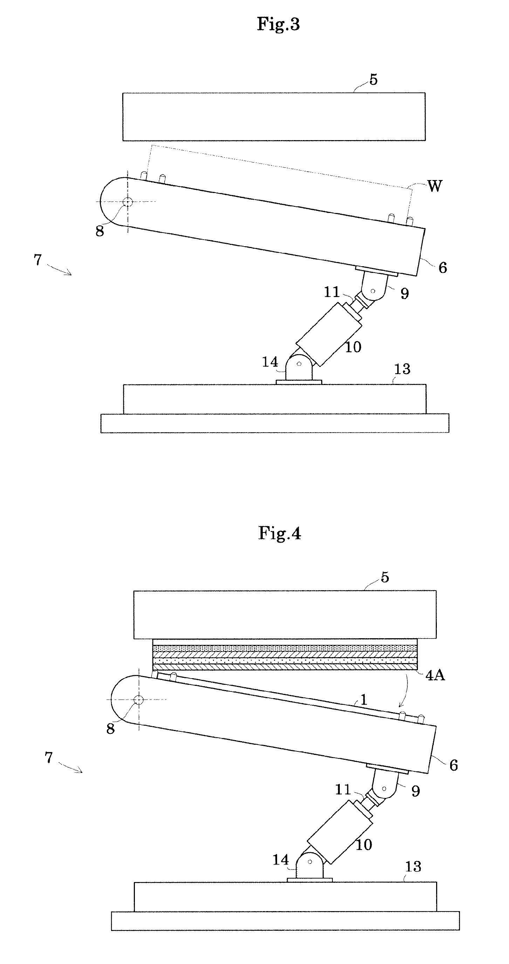

As shown in Figure 3, the rod 11 of the air cylinder 10 is contracted, whereby the lower holding member 6 swings downward. The lower holding member 6 stops swinging downward when the first end thereof moves downward to a given angle to generate a space with the upper holding member 5. Then the workpiece W is set in the positioning member 12 attached in advance. Here, the workpiece W is set onto the suction surface of the lower holding member 6 with the glass plate 1 being directed downward.

Upon completion of setting, the rod 11 of the air cylinder 10 expands while the lower holding member 6 suction-holds the workpiece W. Thus the lower holding member 6 returns to the horizontal position as shown in Figure 2. When the lower holding member 6 reaches a horizontal position, the air cylinder 10 stops expanding and the upper holding member 5 suction-holds the workpiece.

Subsequently, the lower holding member 6 swings downward while the rod 11 of the air cylinder 10 contracts at a speed determined in advance. As shown in Figure 4, with downward swing of the lower holding member 6, the glass plate 1 is detached gradually from one end thereof while being held in a planar state with the lower holding member 6.

Herein, speeds and forces for swinging the lower holding member 6 downward are determined in advance through experiments and simulations in accordance with types of adhesive sheets or curable resin layers to be used as to conform optimal conditions where the as glass plate is not damaged. Moreover, speeds and forces for swinging the lower holding member 6 downward may be fixed or varied during downward swing.

When detachment of the glass plate 1 up to the second end is completed, the lower holding member 6 stops swinging downward. Then suction-holding of the glass plate 1 is released and the glass plate 1 is removed.

As mentioned above, a series of processes in detaching the glass plate 1 from the display panel 3 is completed. Subsequently, the same processes as above are to be repeated.

In the foregoing example of the invention, the "adhesive sheet" means a sheet-like product of acrylic, silicone series, urethane series and other known pressure-sensitive adhesives used for apparatuses and equipments in various fields for adhering metal plates, plastic plates and the like. While the thickness is not particularly limited, it is generally 10 to 1000 µm.

In this example of the invention, the "transparent adhesive sheet" means a two-sided adhesive sheet made from a highly transparent adhesive composition, which is particularly used for adhesion of two optical plates. From the aspects of adhesion strength between two optical plates and thin-shaped flat-panel display, it generally has a thickness of about 20 to 800 µm.

As such transparent adhesive sheet, known transparent adhesive sheets used for optical purposes can be mentioned. Particularly preferred are acrylic, silicone series and other transparent adhesive sheets, and transparent adhesive sheets having polyoxyalkylene series polymers as a main component that are proposed by the present Applicant in JP-A-2008-266473 can be mentioned.

### [Acrylic Transparent Adhesive Sheet]

As the acrylic transparent adhesive sheet, an adhesive sheet of an acrylic adhesive comprising, as a base polymer, an acrylic polymer containing an alkyl(meth)acrylate monomer unit as a main skeleton can be specifically mentioned (here, "(meth)acrylate" means "acrylate and/or methacrylate").

The alkyl group of alkyl(meth)acrylate constituting the main skeleton of the acrylic polymer has an average carbon number of about 1-12. Specific examples of alkyl(meth)acrylate include methyl(meth)acrylate, ethyl(meth)acrylate, n-butyl(meth)acrylate, 2-ethylhexyl(meth)acrylate, isooctyl(meth)acrylate, isononyl(meth)acrylate, lauryl(meth)acrylate and the like, which can be used alone or in combination. Particularly, alkyl(meth)acrylate containing an alkyl group having a carbon number of 1-9 is preferable.

To improve adhesiveness and heat resistance, one or more types of various monomers are introduced into the acrylic polymer by copolymerization. Specific examples of such copolymerizable monomer include monomers containing a hydroxyl group such as 2-hydroxyethyl(meth)acrylate, 2-hydroxypropyl(meth)acrylate, 4-hydroxybutyl(meth)acrylate, 6-hydroxyhexyl(meth)acrylate, 8-hydroxyoctyl(meth)acrylate, 10-hydroxydecyl(meth)acrylate, 12-hydroxylauryl(meth)acrylate, (4-hydroxymethylcyclohexyl)-methylacrylate and the like; monomers containing a carboxyl group such as (meth)acrylic acid, carboxyethyl(meth)acrylate, carboxypentyl(meth)acrylate, itaconic acid, maleic acid, fumaric acid, crotonic acid and the like; monomers containing an acid anhydride group such as maleic anhydride, itaconic anhydride and the like; caprolactone adduct of acrylic acid; monomers containing a sulfonic acid group such as styrenesulfonic acid, allylsulfonic acid, 2-(meth)acrylamide-2-methylpropanesulfonic acid, (meth)acrylamidepropanesulfonic acid, sulfopropyl(meth)acrylate, (meth)acryloyloxynaphthalenesulfonic acid and the like; monomers containing a phosphoric acid group such as 2-hydroxyethylacryloylphosphate and the like; and the like. Examples also include nitrogen-containing vinyl monomers, such as maleimide, N-cyclohexylmaleimide, N-phenylmaleimide; N-acryloylmorpholine; (N-substitution)amide monomers such as (meta)acrylamide, N,N-dimethyl(meta)acrylamide, N,N-diethyl(meta)acrylamide, N-hexyl(meta)acrylamide, N-methyl(meta)acrylamide, N-butyl(meta)acrylamide, N-butyl(meta)acrylamide, N-methylol(meta)acrylamide, N-methylolpropane(meta)acrylamide and the like; (meth)acrylic acid alkylaminoalkyl monomers such as (meth)acrylic acid aminoethyl, aminopropyl(meth)acrylate, N,N-dimethylaminoethyl(meth)acrylate, t-butylaminoethyl(meth)acrylate, 3-(3-pyridinyl)propyl(meth)acrylate and the like; (meth)acrylic acid alkoxyalkyl monomers such as methoxyethyl(meth)acrylate, ethoxyethyl(meth)acrylate and the like; succinimide monomers such as N-(meta)acryloyloxymethylenesuccinimide, N-(meta)acryloyl-6-oxyhexamethylenesuccinimide, N-(meta)acryloyl-8-oxyoctamethylenesuccinimide, N-acryloylmorpholine and the like; and the like.

Moreover, vinyl monomers such as vinyl acetate, vinyl propionate, N-vinylpyrrolidone, methylvinylpyrrolidone, vinylpyridine, vinylpiperidone, vinylpyrimidine, vinylpiperazine, vinylpyrazine, vinylpyrrole, vinylimidazole, vinyloxazole, vinylmorpholine, N-vinylcarboxylic acid amides, styrene, [alpha]-methylstyrene, N-vinylcaprolactam and the like; cyanoacrylate monomers such as acrylonitrile, methacrylonitrile and the like; epoxy group-containing acrylic monomers such as (meth)acrylic acid glycidyl and the like; glycol acrylic ester monomers such as (meth)acrylic acid polyethylene glycol, (meth)acrylic acid polypropylene glycol, (meth)acrylic acid methoxymethylene glycol, (meth)acrylic acid methoxypolypropylene glycol and the like; acrylic acid ester monomers such as (meth)acrylic acid tetrahydrofurfuryl, fluorine(meth)acrylate, silicone(meth)acrylate, 2-methoxyethylacrylate and the like; and the like can be mentioned.

Among these, hydroxyl group-containing monomers are preferable since they show good reactivity with isocyanate group when an isocyanate crosslinking agent is used as a crosslinking agent. From the aspects of adhesiveness to a liquid crystal panel and a transparent protection plate and adhesion durability, moreover, carboxyl group-containing monomers such as acrylic acid and the like are preferable, and acrylic acid is particularly preferable.

The ratio of the copolymerizable monomer in an acrylic polymer is preferably about 0.1 to 10% by weight.

While the average molecular weight of the acrylic polymer is not particularly limited, the weight average molecular weight is generally about 300,000 to 2,500,000.

The acrylic polymer can be produced by various known means, and a radical polymerization method such as bulk-polymerization method, solution-polymerization method, suspension-polymerization method and the like can be appropriately selected. As a radical polymerization initiator, various known azo and peroxide initiators can be used. The reaction temperature is generally about 50 to 80°C, and the reaction time is 1 to 8 hours. The acrylic polymer can also be prepared through ultraviolet ray polymerization using a photo-polymerization initiator.

The acrylic adhesive can contain, in addition to a base polymer, a crosslinking agent, which improves adhesion to optical plates and durability, as well as affords reliability at high temperature and maintenance of the shape of an adhesive itself. As the crosslinking agent, known crosslinking agents such as isocyanate series, epoxy series, peroxide series, metal chelate series, oxazoline series, multifunctional acrylate series and other agents can be used as appropriate. These crosslinking agents can be used alone or in a combination of two or more kinds. The amount of the crosslinking agent to be used is not particularly limited, but is not more than 10 parts by weight, preferably 0.01 to 5 parts by weight, more preferably 0.02 to 3 parts by weight, per 100 parts by weight of the acrylic polymer.

The aforementioned adhesive may also contain, where necessary, various additives such as tackifier, plasticizer, filler made of glass fiber, glass bead, metal powder, other inorganic powder etc., pigment, colorant, antioxidant, UV absorber, silane coupling agent and the like as appropriate. The production method of an adhesive sheet is not particularly limited and, for example, a method including applying a photopolymerizable composition containing a monomer for copolymerization with a monomer for main skeleton of base polymer, a radical polymerization initiator, a crosslinking agent and the like to a surface of a mold-release sheet subjected to a release treatment to form a coated film with a given thickness, adhering thereto a surface of a mold-release sheet subjected to a release treatment, and exposing the resulting product to UV irradiation to allow a polymerization reaction to proceed, whereby an adhesive sheet is formed, can be mentioned.

The adhesive sheet (transparent adhesive sheet) in the example of the invention may include a base material or may be composed of only adhesive layers with no base material. For the adhesive sheet with the base material, properties of material thereof is not particularly limited. A plastic film, a metallic foil, a paper, a woven fabric, a nonwoven fabric, etc. can be adopted for the base material. Specifically, for the transparent adhesive sheet with the base material, the base material itself has to be transparent. In this regard, a transparent plastic film, such as a polyethylene terephthalate film and a polyolefin series film can be adopted for the base material.

### [Transparent Silicone Adhesive Sheet]

The transparent silicone adhesive sheet is not particularly limited and, for example, known transparent silicone adhesive sheets using the polyorganosiloxane composition and the like can be mentioned.

### [Transparent Polyoxyalkylene Adhesive Sheet]

A transparent adhesive sheet can be mentioned that is configured with a cure product prepared by curing a composition comprising the following A to C: A: polyoxyalkylene-series polymer having at least one alkenyl group in each molecule; B: compound comprising an average of two or more hydrosilyl groups in each molecule; and C: hydrosilylation catalyst.

### [Optical plate]

An optical plate refers to a member having optical characteristics (e.g., polarizability, refractivity, light scattering properties, light reflex properties, light transmittance properties, light absorption properties, optical diffraction properties, optical activity, visibility, transparency, and the like). The optical plate is not particularly limited as long as it has optical characteristics. Examples of the optical plate include a member that forms optical products, such as a display unit (image display device) and an input device, or a member used for these instruments (optical products). Specifically, included are a polarizing plate, a wavelength plate, a phase difference plate, an optical compensation film, a luminance improving film, a lightguide plate, a reflection film, an antireflection film, a transparent electric conduction film (ITO film, etc.), a glass plate with a transparent electrode, a design film, an ornament film, a transparent protection sheet (surface-protective plate), a prism, a lens, a color filter, a transparent substrate, and a member having these laminated thereon (these may be collectively referred to as a "functional film"). Herein, the "plate" or "film" mentioned above each includes forms in the shape of a plate, a film, a sheet, and the like. For example, the "polarizing film" includes a "polarizing plate" and a "polarizing sheet." Moreover, the "functional film" includes a "functional plate" and a "functional sheet."

Examples of the foregoing display unit (the display panel of a flat-panel display) include a liquid crystal display, an organic EL (electroluminescence) display, a PDP (plasma display panel), and an electronic paper. A touch panel, etc., can be mentioned as the above-mentioned input unit.

The foregoing optical plate is not particularly limited. Examples of the optical plate includes a member composed of an acrylic resin, a polycarbonate resin, polyethylene terephthalate, a glass, a metallic thin film, and the like (e.g., a member in the shape of a sheet, a film, a plate, and the like mentioned above.) Herein, the "optical plate" in the example of the invention also includes a member serving as decoration or protection of the display and the input units while maintaining their visibility (e.g., a design film, an ornament film, a surface-protective plate, and a window with design property.)

The workpiece applied to the detaching method and the detaching apparatus in the example of the invention may be a construct, other than the construct of "plate/adhesive sheet or curable resin layer/ plate", having three or more plates being laminated via the adhesive sheet or the curable resin layer. For example, the construct may be "a plate/ an adhesive sheet or curable resin layer/ a plate/ an adhesive sheet or curable resin layer/ a plate." More specifically, the workpiece is applicable that has a construction of "a transparent protection plate/ an adhesive sheet or curable resin layer/a glass plate with a transparent electrode/ an adhesive sheet or curable resin layer/ a display panel of a flat-panel display."

According to the foregoing exemplary apparatus, the holding member 6 holds the entire surface of the glass plate 1. Thus the plate 1 is not bent and damaged when it is detached from the display panel 3 along with swinging of the holding member 6. Moreover, the support shaft 8 as a supporting point for swing of the holding member 6 is located outside of the end of the glass plate 1. Thus no load to the supporting point is applied to the center of the glass plate 1, and thus the glass plate 1 is not damaged.

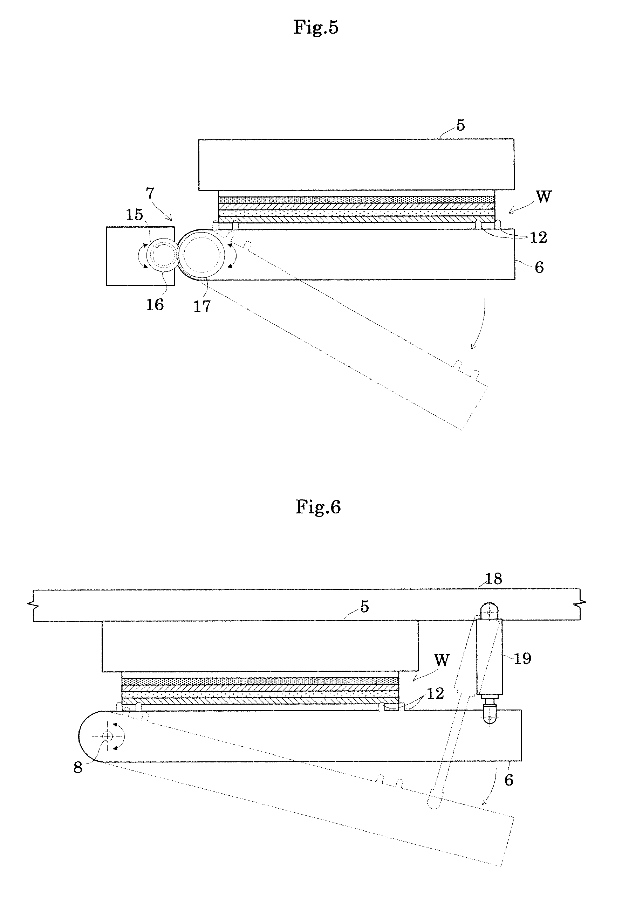

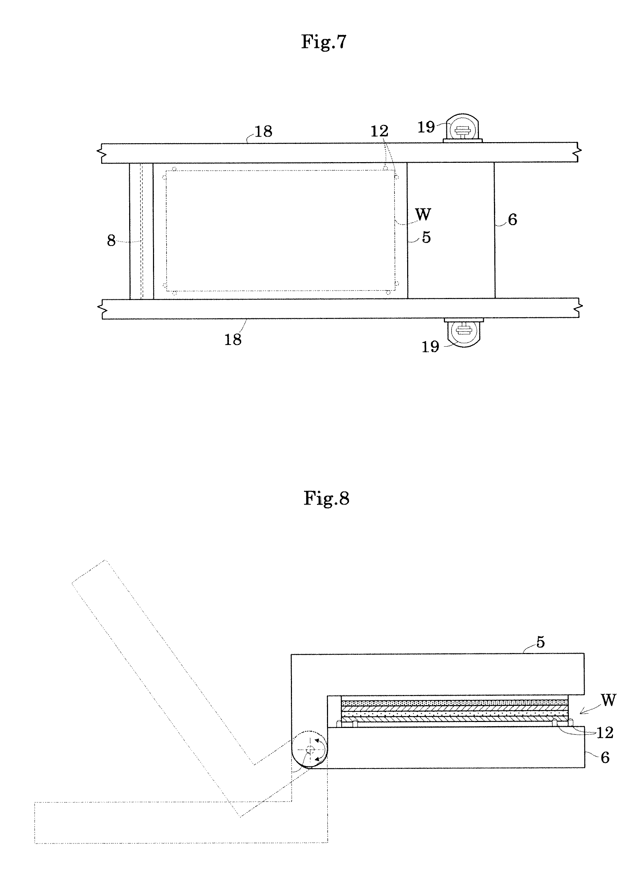

This invention may be embodied as the following aspects.
(1) In the foregoing exemplary apparatus, the drive mechanism 7 is not limited to the air cylinder 10. It may be a member that enables swinging of the lower holding member 6 downward. For instance, as shown in Figure 5, a torque motor 15 may rotate forward/backward to swing the lower holding member 6. Specifically, rotation force is transferred from a gear 16 mounted on the torque motor 15 to a gear 17 mounted on the support shaft 8.
   For another modification, as shown in Figures 6 and 7, the lower holding member 6 has an expanded portion on the tip side so as to be longer than the upper holding member 5. An actuator 19 capable of expansion/contraction is connected over both ends of the expanded portion on the tip end and a pair of frames 18. The actuator 19 moves in and out to swing the lower holding member 6 while pressing it down. Such configuration may be adopted.
   In such configuration, one actuator 19 slightly expands to form a starting position for detachment at a corner of the workpiece W. Thereafter, the glass plate 1 is gradually detached from the corner toward the other end while a distance by which both the actuators 19 expands is controlled. Such configuration may be adopted.
(2) In the foregoing exemplary apparatus, the upper holding member 5 may swing instead of the lower holding member 6. Moreover, when the workpiece W is set on either upper holding member 5 or the lower holding member 6, the suction surface on which the workpiece W is set may be horizontal. For instance, as shown in Figure 8, the upper holding member 5 may swing to be open to 180 degrees.
(3) In the foregoing exemplary apparatus, only the lower holding member 6 swings. Alternatively, the upper holding member 5 may swing simultaneously with the lower holding member 6.
(4) In the foregoing exemplary apparatus, a heater is embedded within either the upper holding member 5 or the lower holding member 6 for heating the adhesive sheet 4. That is, heating of the adhesive sheet 4 causes softening of the adhesive, achieving easy detachment. Here, heating temperatures are set such that electrodes that form the touch panel and the display panel 3 are not damaged.
(5) In the foregoing exemplary apparatus, the workpiece may be formed with three or more plates laminated one another, and each plate may be detached. In this case, an adhesive strength of the adhesive layer between the plates may be adjusted, and the plate with a weaker adhesive force may be detached in turn

It will be apparent to those skilled in the art that various modifications and variations can be made in the present invention without departing from the spirit or scope of the invention. Thus, it is intended that the present invention cover the modifications and variations of this invention provided they come within the scope of the appended claims and their equivalents.

## Claims

1. A method of detaching a plate from a workpiece composed of at least two plates including the plate that are joined to each other via an adhesive sheet or a curable resin layer, comprising:
a holding step holding both surfaces of the workpiece by a pair of holding members; and
a detaching step detaching a first plate from a second plate through swinging one holding member around a support shaft provided on a first end side of a holding surface of the workpiece with an entire surface of the first plate being held in a planar state with the holding member.

2. The method of detaching the plate according to claim 1, wherein
a heater is provided in at least one of the holding members, and the first plate is detached from the second plate while the adhesive sheet or the curable resin layer is heated by the heater via the holding member.

3. The method of detaching the plate according to claim 1 or 2, wherein
the two plates are optical plates, and the adhesive sheet is a transparent adhesive sheet.

4. The method of detaching the plate according to claim 3, wherein
one of the two optical plates is a display panel of a flat-panel display and the other of the two optical plates is a transparent protection plate for protecting the display panel.

5. The method of detaching the plate according to claim 3, wherein
one of the two optical plates is a display panel of a flat-panel display and the other of the two optical plates is a glass plate with a transparent electrode for a touch panel.

6. A detaching apparatus for detaching a plate from a workpiece composed of at least two plates including the plate that are joined to each other via an adhesive sheet or a curable resin layer, comprising:
a holding mechanism for holding both surfaces of the workpiece by a pair of holding members, the workpiece being provided with a support shaft on one end side of a holding surface thereof around which at least one holding member can swing; and
a drive mechanism for swinging the holding member.

7. The detaching apparatus according to claim 6, further comprising a heater in at least one of the holding members.
